# EUROPEAN PATENT SPECIFICATION

(11) **EP 0 391 600 B1**
(45) Date of publication and mention of the grant of the patent: **20.04.1994**
(21) Application number: 90303325.6
(22) Date of filing: 28.03.1990
(51) Int. Cl.: B60C 11/00, B60C 11/04

(54) **Tyre tread pattern**
Lauffläche eines Luftreifens
Dessin de bande de roulement de pneumatique

(30) Priority: 01.04.1989 GB 8907400
(43) Date of publication of application: 10.10.1990
(73) Proprietor: SUMITOMO RUBBER INDUSTRIES LIMITED, Chuo-ku Kobe-shi Hyogo 651 (JP)
(72) Inventor: Nock, Nigel Gerard, Bromford Road, Birmingham B36 8DG (GB); Clarke, David Henry, Walsall, West Midlands WS4 1 EB (GB); Martin, John, Sutton Coldfield, West Midlands B72 1AL (GB)
(74) Representative: Stewart, Charles Geoffrey

(56) References cited:
- DE-A- 2 934 522
- GB-A- 2 008 043
- US-A- 2 006 197
- US-A- 2 056 131
- PATENT ABSTRACTS OF JAPAN, vol. 13, no. 484 (M-886)[3832], 2nd November 1989;
- & JP-A-1 190 505 (YOKOHAMA RUBBER CO., LTD) 31-07-1989

## Description

This invention relates to a tyre tread pattern particularly suitable for use on a car.

The modern trend in tyre tread patterns has been to improve wet grip and overall vehicle response and handling by using many grooves to form the pattern. Patterns often comprise a series of spaced apart blocks formed by circumferentially and transversely extending grooves which provide many ground contacting edges to give the west grip required. Problems of noise with such tread patterns however occur and there are many approaches to reducing this noise; including for example, to vary the block size and arrangement around the tyre to try and make the noise into white noise rather than predominant frequencies which can cause annoying noise in the vehicle.

A heavy duty tyre for trucks and buses comprising blocks spaced apart from each other in the circumferential direction by transverse grooves wherein at least some of the blocks are provided with a buttress extending from the bottom of the groove along the groove wall is disclosed by GB-A-2008043. The height of the buttress is between 40% to 80% of the depth of the transverse groove. The provision of such buttresses is said to reduce tread wear particularly eccentric wear whilst maintaining wet grip.

Despite all attempts however car tyre tread patterns having good wet grip tend to be noisy and it is an object of the present invention to try and avoid the noise being perceived in the vehicle and outside the vehicle even though the noise is itself generated in the contact patch between the tyre and road.

According to one aspect of the present invention a tyre tread pattern comprises a central zone and two edge zones in which the edge zones are subdivided circumferentially of the tyre by a series of transverse grooves each having an axially outer end open to the tread edge wherein each transverse groove has a noise baffle extending across the groove and having a height of 25% to 75% of the groove depth characterised in that the noise baffle comprises two or more circumferentially extending short ribs extending from opposite sidewalls of the transverse groove in staggered arrangement so as to block the transmission of noise.

The noise baffle is therefore two or sometimes three short ribs which project from either side of the groove and interlock so as to form a noise wall or baffle. In this arrangement water is still able to be ejected along the groove.

Preferably the noise baffle has a width measured axially of the tyre of 3 to 10mm. More preferably the baffle width is 3 to 5mm so that it does not significantly affect the tread block structural stiffness but affects noise.

The noise baffle may be positioned anywhere in the edge region but again it is preferred that the distance of the noise baffle from the tread edge is between 2 and 25% and more preferably 2 and 10% of the width of the tread so that the baffles are substantially at the edge of the tread contact zone with the road again to block tread induced noise most efficiently.

Noise baffles of this type may be used with various tread patterns including patterns having central ribs and blocks in the edge zones but it is particularly advantageous to use such noise baffles with tread patterns comprising blocks in both edge and central regions.

The noise baffles may have various shapes either with sides which extend radially of the tyre or with sides which extend at acute angles to the radial direction.

The noise baffles operate to restrict noise escape from the contact patch whilst at the same time they are sufficiently low to allow water to be ejected from the tyre sides in use of a new tyre pattern in wet conditions.

Further features of the present invention will become apparent from the following description by way of example only of embodiments of the invention in conjunction with the attached diagrammatic drawings in which:-
Fig. 1 is a plan view of a section of a block pattern tyre tread;
Fig. 2 is a section on the line AA in Fig. 1;
Fig. 3 is a scrap sectional view in the direction of arrow B in Fig. 2;
Fig. 4 is a plan view of a block pattern showing three arrangements of noise baffles according to the present invention;

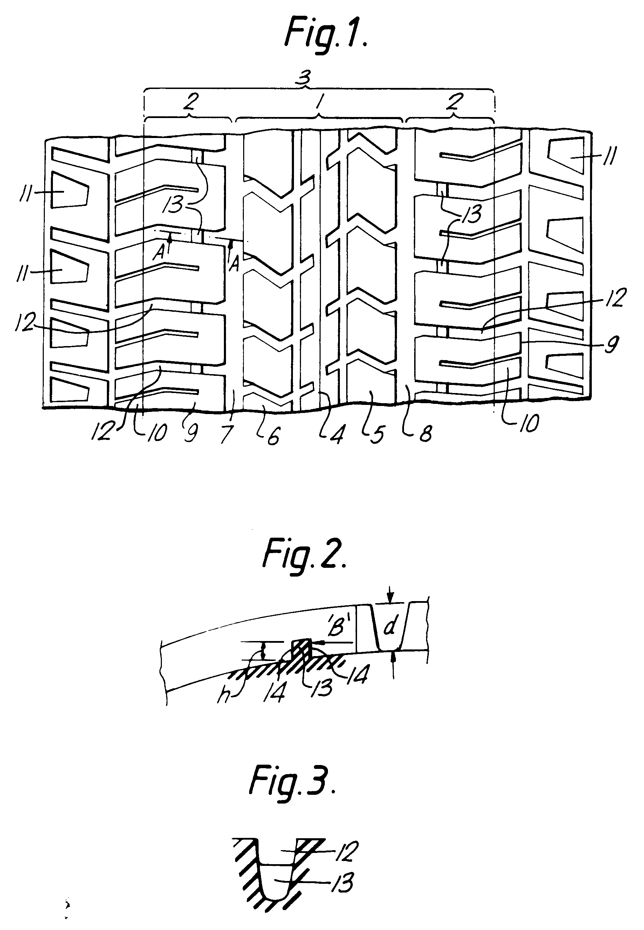

The tyre tread pattern shown in Fig.1. comprises a central zone 1 and edge zones 2 which extend to the edges of the contact patch 3 which in this case has a width of 125mm. The pattern in the central region comprises a central rib 4 and two rows 5 & 6 of tread blocks which are sub-divided by grooves in the circumferential and lateral directions as shown. The central zone of the tread 1 is separated from the edge regions by two circumferentially continuous straight grooves 7 & 8.

The edge regions 2 of the tyre comprise a series of circumferential spaced blocks of rubber 9 each having a small slit like groove 10 extending to the edge of the blocks. In conventional manner these blocks extend around the profile of the tyre away from the ground contacting portion 3 and into a series of rectangular angular sidewall embellishments 11 which complete the visual appearance of the tyre. The central region 1 and the tread blocks 9 are the ground contact regions which give the wet grip and handling performance of the vehicle.

The blocks 9 are separated by transversely extending grooves 12 which grooves are open at the edges of the tread so that water expelled from the central portion of the ground contact patch may be expelled through the grooves out of the contact patch. Each of the circumferential grooves 7 &8 are positioned a distance of 34mm inwards from the edge of the contact patch which defines the width of the edge blocks 9.

The grooves 12 are provided with noise baffles 13 one to each groove. In Fig.1 each noise baffle comprises a narrow projecting rubber ridge member shown in Figs. 2 &3 which crosses the groove from block to block and which has a height h measured in the radial direction of the tyre which is half the groove depth d. The ribs 13 have a width of 5mm measured transversely of the tyre and their side faces 14 extend in substantially the radial direction of the tyre. Thus as can be seen in figure 3 the ribs or noise baffles 13 blocks the lower regions of each groove 12 but being narrow do not substantially affect the block stiffness.

The tread blocks 9 are of otherwise conventional design with their lengths, measured in the circumferential direction, varied and their positions around the tread circumference varied according to the conventional rules for scrambling to reduce the tyre noise. In use of the tyre however, there is a further substantial reduction in tyre noise which is believed is due to the noise baffles 13 interfacing with or reflecting back into the tyre pattern noise levels coming from the central regions of the contact patch. Substantial reductions in tyre tread noise have been seen in initial test tyres.

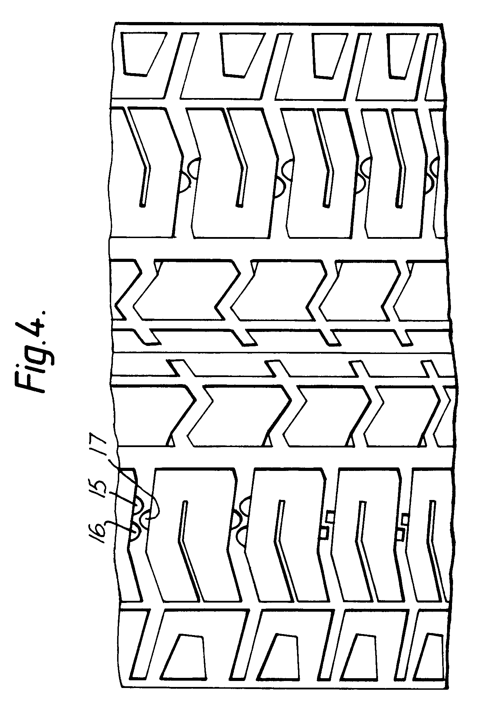

Figure 4 shows three embodiments of the present invention. The top left-hand embodiment uses three interlocking noise baffles 15, 16 and 17, 15 and 16 being one side of the groove and 17 the other side. The interlocking leaves a water clearing path but does not leave a straight path and thus the interlocking baffles 15, 16 and 17 impede the noise moving along the groove.

The bottom left hand and right hand embodiments show alternative two baffle constructions.

The height of the noise baffles may vary between one quarter and three quarters of the depth of the groove d. The reason for the noise baffles being not the full height of the groove depth is to provide the necessary water drainage path for use of the new tyre in wet conditions.

The edge surfaces 14 of the ribs Fig.2. may be formed in other directions to the radial direction with advantageous effect on noise retention but the preferred radial direction is one which is easily moulded in a conventional tyre.

## Claims

1. A tyre tread pattern comprising a central zone (1) and two edge zones (2) in which the edge zones (2) are subdivided circumferentially of the tyre by a series of transverse grooves (12) each having an axially outer end open to the tread edge wherein each transverse groove (12) has a noise baffle (13) extending across the groove and having a height (h) of 25% to 75% of the groove depth (d) characterised in that the noise baffle (13) comprises two or more circumferentially extending short ribs (15,16,17) extending from opposite sidewalls of the transverse groove in staggered arrangement so as to block the transmission of noise.

2. A tyre according to claim 1 characterised in that the noise baffle (13) has a width measured axially of the tyre of 3 to 10mm.

3. A tyre according to claim 1 or 2 characterised in that the noise baffle (13) has a width measured axially of the tyre of 3 to 5mm.

4. A tyre according to any one of claims 1 to 3 characterised in that the noise baffle (13) is positioned a distance of 2% to 25% of the tread width from the edge of the tread.

5. A tyre according to any of claims 1 to 4 characterised in that the pattern comprises a block pattern in both the central zone (1) and the edge regions (2).

## Patentansprüche

1. Ein Reifenlaufflächenprofil mit einer zentralen Zone (1) und zwei Randzonen (2), in welchem die Randzonen (2) in Umfangsrichtung des Reifens durch eine Serie von transversalen Nuten (12) unterteilt sind, von denen jede ein axial äußeres Ende aufweist, das zum Laufflächenrand offen ist, wobei jede transversale Nut (12) einen Geräuschdämpfer (13) aufweist, der sich über die Nut erstreckt und eine Höhe (h) von 25% bis 75% der Nuttiefe (d) besitzt,
dadurch gekennzeichnet,
daß der Geräuschdämpfer (13) zwei oder mehr sich in Umfangsrichtung erstreckende kurze Rippen (15,16,17) umfaßt, die sich von entgegengesetzten Seitenwänden der transversalen Nut in einer versetzten Anordnung erstrekken, um die Geräuschübertragung zu hemmen.

2. Ein Reifen nach Anspruch 1,
dadurch gekennzeichnet,
daß der Geräuschdämpfer (13) eine Breite, axial des Reifens gemessen, von 3 bis 10mm aufweist.

3. Ein Reifen nach Anspruch 1 oder 2,
dadurch gekennzeichnet,
daß der Geräuschdämpfer (13) eine Breite, axial des Reifens gemessen, von 3 bis 5mm aufweist.

4. Ein Reifen nach einem der Ansprüche 1 bis 3,
dadurch gekennzeichnet,
daß der Geräuschdämpfer (13) unter einem Abstand von 2% bis 25% der Laufflächenbreite vom Rand der Lauffläche positioniert ist.

5. Ein Reifen nach einem der Ansprüche 1 bis 4,
dadurch gekennzeichnet,
daß das Profil ein Blockprofil in sowohl der zentralen Zone (1) als auch den Randbereichen (2) umfaßt.

## Revendications

1. Sculpture de bande de roulement, comprenant une zone centrale (1) et deux zones de bord (2), dans laquelle les zones de bord (2) sont subdivisées, suivant la circonférence du pneumatique, par une série de gorges transversales (12) ayant chacune une extrémité axialement externe qui débouche vers le bord de la bande de roulement, chaque gorge transversale (12) ayant un déflecteur de bruit (13) disposé transversalement à la gorge et ayant une hauteur (h) comprise entre 25 et 75 % de la profondeur (d) de la gorge, caractérisée en ce que le déflecteur de bruit (13) comporte au moins deux courtes nervures (15, 16, 17) d'orientation circonférentielle, partant des parois latérales opposées de la gorge transversale et décalées mutuellement afin qu'elles empêchent la transmission du bruit.

2. Pneumatique selon la revendication 1, caractérisé en ce que le déflecteur de bruit (13) a une largeur, mesurée suivant l'axe du pneumatique, comprise entre 3 et 10 mm.

3. Pneumatique selon la revendication 1 ou 2, caractérisé en ce que le déflecteur de bruit (13) a une largeur, mesurée dans la direction de l'axe du pneumatique, qui est comprise entre 3 et 5 mm.

4. Pneumatique selon l'une quelconque des revendications 1 à 3, caractérisé en ce que le déflecteur de bruit (13) est placé à une distance du bord de la bande de roulement comprise entre 2 et 25 % de la largeur de la bande de roulement.

5. Pneumatique selon l'une quelconque des revendications 1 à 4, caractérisé en ce que la sculpture comporte un dessin de blocs à la fois dans la zone centrale (1) et dans les régions de bord (2).
